# EUROPEAN PATENT APPLICATION

(11) **EP 0 855 288 A2**
(43) Date of publication of application: **29.07.1998**
(21) Application number: 97830698.3
(22) Date of filing: 23.12.1997
(51) Int. Cl.: B42D 15/02

(54) **Postcard with floppy disk or cd-rom**

(30) Priority: 24.12.1996 IT AN960041 U
(71) Applicant: Laboratorio delle Idee - S.A.S. di Millevolte Alessandra E C., Fabriano (AN) (IT)
(72) Inventor: Millevolte, Alessandra, Ancona (AN) (IT); Busco, Paola, Fabriano (AN) (IT); Mustica, Massimo, Matelica (MC) (IT); Mustica, Sergio, Fabriano (AN) (IT); Mustica, Stefano, Terni (TR) (IT)
(74) Representative: Baldi, Claudio

(57) **Abstract**

This patent application concerns a postcard with floppy disk or CD-ROM on which the postcard picture is stored as a 3D panoramic image which can be manipulated by PC mouse.

## Description

This patent application concerns a postcard with floppy disk or CD-ROM on which the postcard picture is stored as a 3D panoramic image which can be manipulated by PC mouse.

Postcards illustrating the photograph of a city, monuments, scenery etc. have been sold for many years.

In this sense traditional postcards have a standardised graphic layout which is somewhat outdated and which no longer seems to meet the requirements and tastes of today's customers.,

For this reason a new concept in illustrated postcards is introduced exploiting the enormous potential offered by the world of informatics which will give a new and considerable drive to the distribution and sale of postcards.

In particular the idea of this invention is to design an illustrated postcard fitted with a floppy disk or CD-ROM on which the photograph illustrated on the postcard itself is stored.

It should be noted that the image stored on the floppy disk or CD-ROM, and which can naturally be reproduced on a PC video screen is a 3D panoramic image which can be manipulated by means of a PC mouse.

This means quite naturally that the image stored on the floppy disk or CD-ROM and reproduced on the video screen is of much better quality than that illustrated on the paper card.

It is thus evident that the paper component (namely the postcard itself) of the item according to the invention does not merely act as the support for the photograph but also has another extremely innovative function which is completely different with respect to traditional postcards.

On one hand in fact it illustrates to the potential customer the static 3D and panoramic image stored on the floppy disk or CO-ROM supplied with the same and on the other, it acts as container or protective packaging for the floppy disk or CD-ROM.

It should also be noted that the image stored on the floppy disk or CD-ROM may be sectional or knocked down (like the pieces of a jigsaw puzzle) thanks to the use of the mouse.

This invention also provides that the paper component of the item according to the invention may be produced in different forms as long as the same can house the floppy disk or CD-ROM.

In a preferred embodiment the paper component of the item in question consists of an approximately parallelepiped shaped thin cardboard box without sides; in particular the front surface of this case would consist of the actual photographic image while the back of the box would be printed for the address of the addressee, space for the message of the sender and postage stamps.

A conforming cardboard package to house the floppy disk or CO-ROM is fitted in the cardboard box through opening on its sides.

In an alternative embodiment, the paper component of the item according to the invention could consist of an envelope in cardboard or heavy paper capable of housing the floppy disk or CO-ROM; in this case the front of the envelope is used for the reproduction of the photographic image while the back is used for the address, message and postage stamps.

It is evident that the paper part of the item could be designed in different shapes provided the same can house the floppy disk or CD-ROM.

For major clarity the description of the invention continues with reference to the enclosed drawings which are intended for purposes of illustration and not in a limiting sense, whereby:
- figures 1 and 2 are the front and back view of the box whose front surface is constituted entirely by the illustrated postcard;
- figures 3 to 6 illustrate the folding stages of the cardboard package which houses the floppy disk or CD-ROM and which is fitted into the box as shown in figures 1 and 2;
- figure 7 is an axonometric view which illustrates how the package shown in figures 3/6 is inserted in the box shown in figures 1 and 2;
- figure 8 is an axonometric view of an alternative structural embodiment (shaped like an envelope) of the item according to the invention.

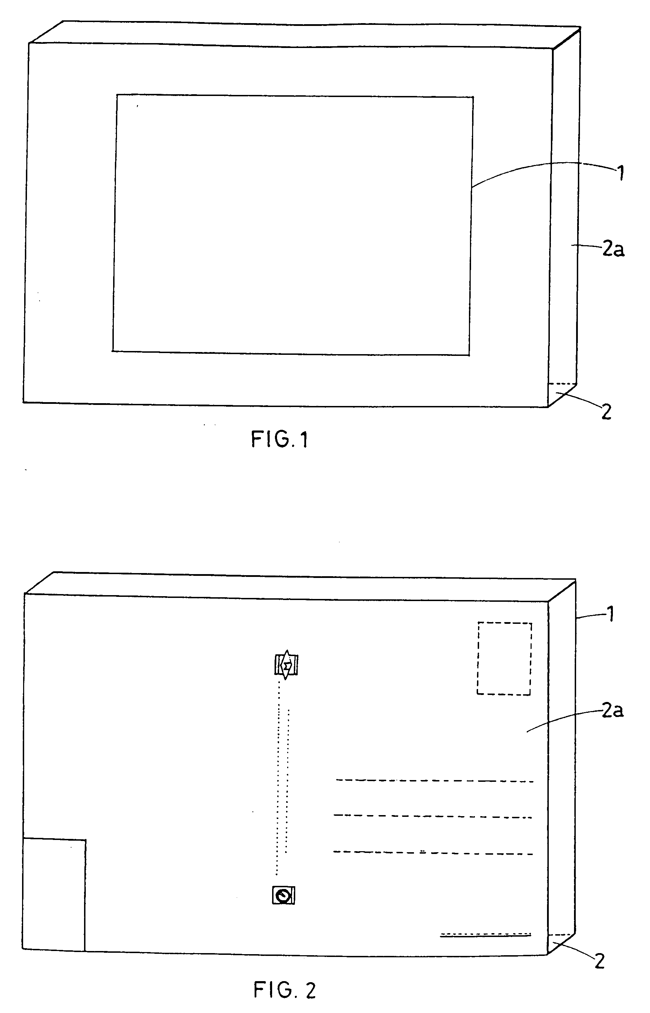

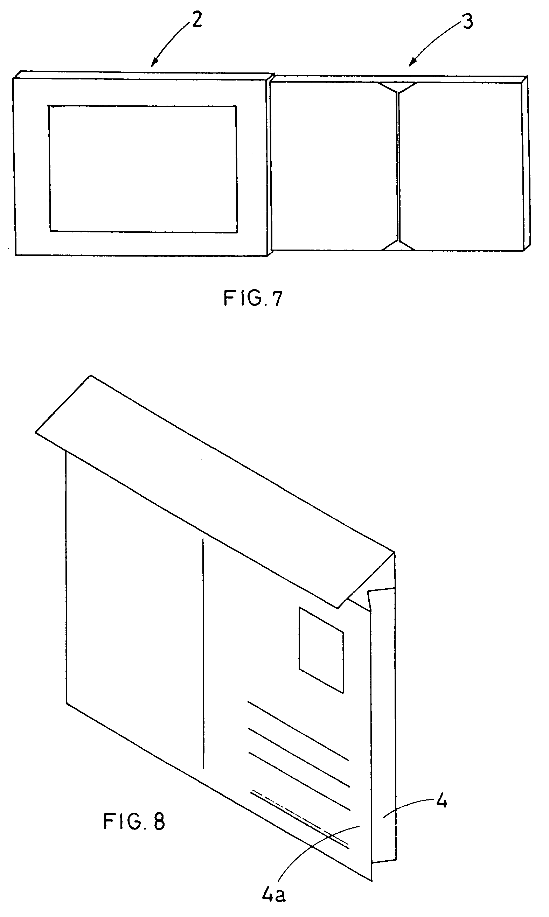

With reference to figures 1,2 and 7, the postcard according to the invention (1) constitutes the front surface of a small cardboard box (2) having an approximately parallelepiped shape without the two sides, designed to house a conforming cardboard package (3) which acts as casing for a floppy disk or CD-ROM on which a 3D panoramic image which can be manipulated by a mouse is stored and which is the same image printed on the postcard (1); it being provided that the back face (2a) of the box (2) is printed with the space for the address, the message and the postage stamps.

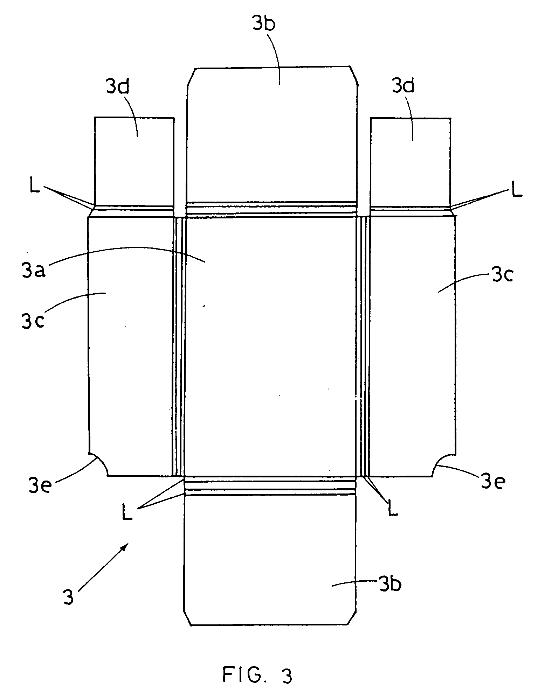

With reference to figures 3 - 6 it should be noted that the internal package (3) which acts as box for the floppy disk or CO-ROM consists of a section of pre-punched cardboard with several folding lines (L) which evidence:
- a rectangular centre section (3a) whose dimensions are similar to that of the above external box;
- two tabs (3b) realised on the transverse edges of the middle section (3a) each being half the length of the centre section (3a);
- two strips (3c) realised on the longitudinal edges of the centre section (3a) each having on one of its sides, a half-moon attachment shaped slot (3e) in proximity of the external angle and a short wing (3d) separated by a folding line in proximity of the opposing side edge.

In order to realise the package (3) with this section of punched cardboard it is necessary to fold the same along the punched lines (L) in a specific order.

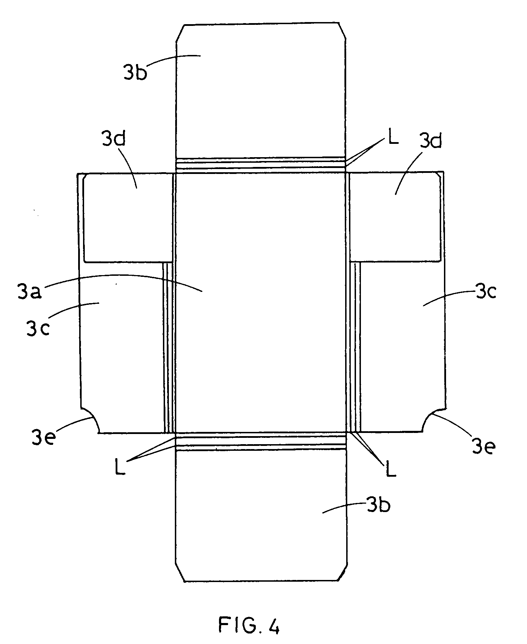

Firstly the wings (3d) realised on the transverse edges of the two strips (3c) are turned inwards by 180° until they touch the strips (3c) as illustrated in figure 4.

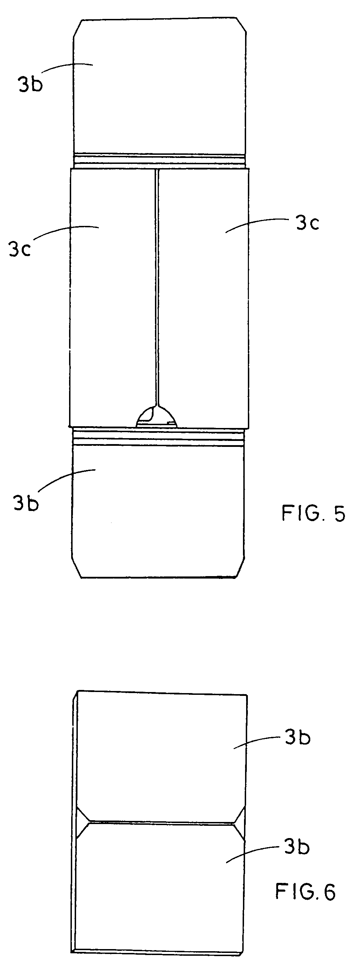

The strips (3c) are then turned 180° towards the centre section (3a) of the cardboard until they touch against the centre section (3a); in this way the wings (3d) are placed in an intermediate position between the centre section (3a) and the strips (3c) as illustrated in figure 5.

Further folding is required in order to turn the two tabs (3b) realised on the transverse edges of the middle section (3a) inwards by 180° so that the same overlap the outer face of the strips (3c) previously folded; see figure 6.

In particular the floppy disk or CO-ROM is housed in the package (3) in question between the wings (3d) and the relevant supporting strips (3c).

In the alternative embodiment illustrated in figure 8 the postcard according to the invention makes up the front face of an envelope (4) having space for the address, message and postage stamps printed on the back (4a) of the same.

It follows that the envelope (4) must be sturdy and large enough to house the floppy disk or CD-ROM which is inserted or otherwise in the cardboard box (3).

## Claims

1. An illustrated postcard characterised in that the same constitutes the front face of a paper container (2, 4) for a floppy disk or CD-ROM on which a 3D panoramic image which can be manipulated by PC mouse identical to the image illustrated on the postcard is stored; it being provided that the back face (2a, 4a) of the paper container is printed like the back face of the postcard with space for the address, the message and postage stamps.

2. An illustrated postcard according to claim 1 characterised in that the paper container whose front face it constitutes consists of a small approximately parallelepiped shaped cardboard box (2) without sides designed to house a conforming cardboard package (3) which acts as casing for the floppy disk or CD-ROM.

3. An illustrated postcard according to claims 1 and 2 characterised in that the package (3) which acts as casing for the floppy disk or CD-ROM consists of a section of pre-punched cardboard having several folding lines which permit evidencing the following:
• a rectangular centre section (3d) whose dimensions are similar to that of the above external box;
• two tabs (3c) realised on the transverse edges of the centre section (3d) each being half the length of the centre section (3d);
• two strips (3b) realised on the longitudinal edges of the centre section (3d) each having on one of its sides, a half-moon shaped slot (3e) in proximity of the external angle and a short wing (3a) separated by a folding line in proximity of the opposing side edge.

4. An illustrated postcard according to claim 1 characterised in that the paper container whose front face it constitutes consists of a cardboard envelope (4) designed to house the floppy disk or CO-ROM, and whose back surface is printed with the spaces for the address, the message and the postage stamps.

5. An illustrated postcard according to the previous claims characterised in that a 3D section and knocked down image of the same photograph printed on its front face is stored on the floppy disk or CO-ROM supplied with the same.
